# EUROPEAN PATENT SPECIFICATION

(11) **EP 2 183 501 B1**
(45) Date of publication and mention of the grant of the patent: **09.03.2011**
(21) Application number: 08790070.0
(22) Date of filing: 18.07.2008
(51) Int. Cl.: F16D 65/18

(54) **BRAKE CALIPER PARKING DEVICE**
BREMSSATTELPARKVORRICHTUNG
DISPOSITIF DE PARKING D'ÉTRIER DE FREIN

(30) Priority: 02.08.2007 IT MI20071597
(43) Date of publication of application: 12.05.2010
(73) Proprietor: Freni Brembo S.p.A., 24035 Curno (Bergamo) (IT)
(72) Inventor: CANOVA, Walter, 24010 Sorisole, BERGAMO (IT); TERUZZI, Andrea, I-24061 Albano S. Alessandro Bergamo (IT); RENZI, Davide, I-23841 Annone Brianza Lecco (IT)
(74) Representative: Crippa, Paolo Ernesto
(86) International application number: PCT/IT2008/000489
(87) International publication number: WO 2009/016674

(56) References cited:
- EP-A- 1 757 836
- DE-A1- 2 402 469
- US-A- 5 060 765
- US-A1- 2004 245 055

## Description

The object of the present invention is a brake caliper parking device for a vehicle disc brake.

Solutions are known from US5060765, US2004/245055, EP1757836 and DE2402469.

Know brake calipers provided with parking systems comprise an actuating lever that can be manually operated by the vehicle driver and that is usually connected to the µhand-brake lever by means of one or more cables. The actuating lever is connected to a driving shaft that is associated with a main plate carrying shaped seats that are suitable to at least partially accommodate balls and allow the latter to roll therein.

These brake calipers further comprise a reaction plate integral with a caliper body of the brake caliper and that is suitable to co-operate with the main plate. The reaction plate, in fact, also has shaped seats which are suitable to accomodate said balls and allow the latter to roll therein. The main plate and the reaction plate are positioned such that their respective ball seats are arranged opposite to each other and thus the balls may simultaneously roll within the seats of both of them. The seats of the main plate and reaction plate are shaped such that, after the rotation of the primary plate, they follow such a pathway as to move the main plate and reaction plate away from each other. Thereby, when the actuating lever is operated, the primary plate, which is connected to the latter by means of the driving shaft, rotatably translates away from the reaction plate.

The main plate is operatively connected to a piston that is suitable to slide relative to the caliper body such that the rotational translation of the main plate causes the piston to translate within the caliper body. When the piston is translating, it pushes on a pad against a disc of the disc brake, thus tightening the latter and providing the parking braking action.

The main plate and the driving shaft can be made as one piece.

Alternatively, the main plate and driving shaft can be made of two distinct pieces that can be rotatably integrally connected to each other, for example by means of geometrical coupling between the contour of a connecting portion of the driving shaft and the contour of a connecting seat of the main plate. The removal of the main plate from the driving shaft, which would be caused by the balls pushing action is avoided due to the provision of an axial bearing that is interposed between the main plate and a head of a threaded pin which is operatively connected to the piston. This constructive solution has, however, large overall dimensions, which are due to the presence of additional components acting as axial constraints for the main plate, as well as a difficulty of properly positioning these additional components relative to the main plate or requirement of furher processing for the proper positioning of the same.

The object of the present invention is thus to provided a brake caliper which has reduced overall dimensions and small assembly difficulties.

These and other objects are achieved by means of a brake caliper parking device according to claim 1, a brake caliper according to claim 17 and a disc brake according to claim 19. Each dependent claim defines a possible embodiment of the parking device, of the brake caliper, or disc brake.

For a better understanding of the invention and in order to appreciate the advantages thereof, several nonlimiting exemplary embodiments will be described herein below, with reference to the annexed drawings, in which:
Fig. 1 is a perspective schematic cut-away view of a brake caliper provided with a parking device according to the invention;
Fig. 2 is a perspective, partially sectioned, schematic view of the brake caliper in Fig. 1;
Fig. 3 is a sectional view of the brake caliper in Fig- 1;
Fig. 4 is a schematic perspective view of a component of the brake caliper in Fig. 1;
Fig. 5 is a perspective schematic view, from a different point of view, of the brake caliper component in Fig. 4;
Fig. 6 is a perspective schematic cut-away view of the brake caliper component in Fig. 4;
Fig. 7 is a perspective schematic cut-away view from a different point of view of the brake caliper component in Fig. 4;
Fig. 8 is a further schematic view of the brake caliper component in Fig. 4;
Fig. 9 is a schematic view according to the arrow D of the brake caliper component in Fig. 8;
Fig. 10 is a schematic view according to the arrow E of the brake caliper component in Fig. 8;
Fig. 11 is a sectional schematic view according to line A-A, of the brake caliper component in Fig. 10;
Fig. 12 is a schematic perspective view of a detail of the brake caliper component in Fig. 4;
Fig. 13 is a perspective schematic view from a different point of view of the detail in Fig. 12;
Fig. 14 is a schematic view of the detail in Fig. 12;
Fig. 15 is a schematic view, according to arrow F, of the detail in Fig. 14;
Fig. 16 is a sectional schematic view according to line C-C, of the detail in Fig. 15;
Fig. 17 is a schematic perspective view of a further detail of the brake caliper component in Fig. 4;
Fig. 18 is a schematic view of the detail in Fig. 17;
Fig. 19 is a sectional schematic view, according to the line B-B, of the detail in Fig. 18.

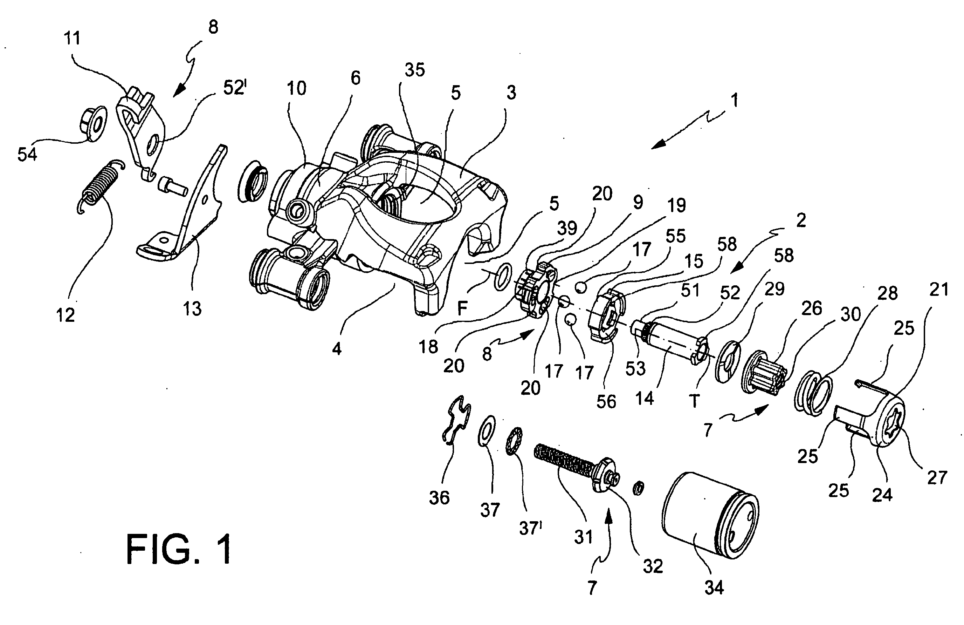

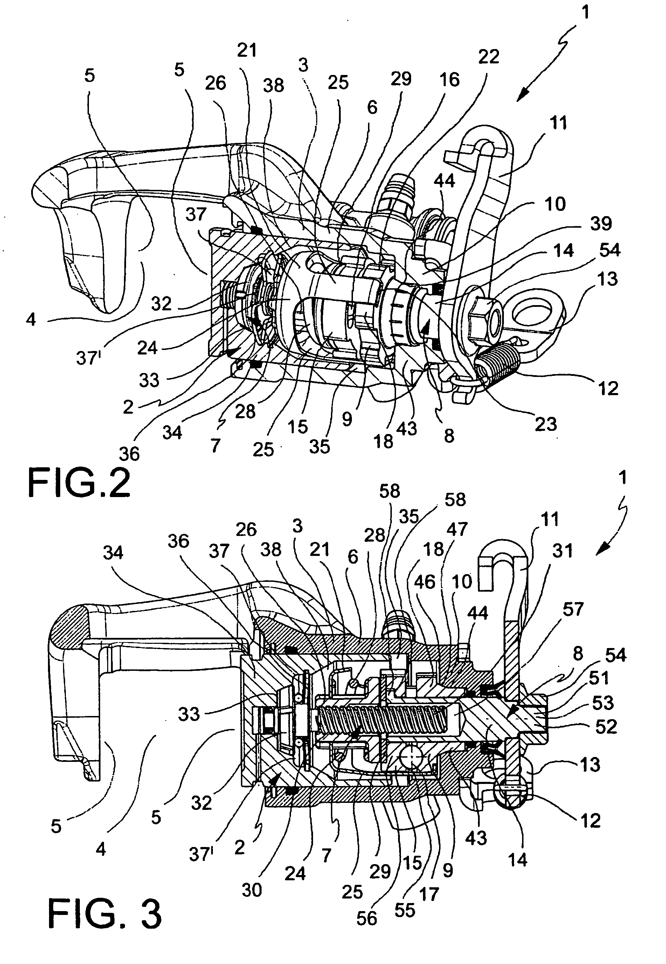

With reference to Fig. 1-3, a brake caliper for a vehicle disc brake is generally designated with 1. The brake caliper 1, preferably thoug not necessarily of the floating type, comprises a parking device 2 suitable to provide a parking braking action of the vehicle that can be controlled by the vehicle driver, such as by acting on the so-called hand brake. Preferably, the caliper 1 is shaped such as to be capable of carrying out, in addition to the parking braking action, also the service braking action, i.e. the braking action that is applied to the vehicle in motion, such as by acting on the brake pedal.

The brake caliper 1 comprises a caliper body 3 which defines a disc space 4 suitable to at least partially accommodate a brake disc (not shown in the drawings) which is associated with a vehicle wheel. On at least one, preferably on both sides of the disc space 4, the caliper body 3 defines pad seats 5 which are suitable to accommodate one or more pads (not shown in the drawings) that are suitable to engage the brake disc, by tightening the latter and thereby providing the braking action.

The parking device 2 comprises a main support body 6 which is preferably made as one piece with the caliper body 3, although it may alternatively be distinct from the latter and connectable thereto.

The parking device 2 comprises thrust means 7 that are suitable to exert a thrust action on at least one of the pads 1 of the caliper such that the latter engages the brake disc.

The parking device 2 further comprises actuating means 8 that are suitable to operate the thrust means 7 such that the latter exert the above-mentioned thrust action on the pad, and a reaction portion 9, such as a reaction element 9 which is connected or can be connected preferably to the support main body 6 of the actuating device 2 at a support portion 10 thereof. This reaction element 9 is suitable to co-operate with the actuating means 8 such that the latter can carry out the actuation of the thrust means 7. The modes of the co-operation between the reaction element 9 and the thrust means 7 will be detailed herein below.

In accordance with an embodiment, the actuating means 8 of the parking device 2 comprise an actuating lever 11 that can be connected for example to a hand brake lever within the vehicle (not shown in the drawings). The actuating lever 11 is connected to the main support body 6 such as to be capable of performing rotations and, preferably, small translations, relative thereto. The actuating lever 11 can move from a rest position, which corresponds to the hand brake lowered position (absence of parking braking action), to a work position, which corresponds to the hand brake raised position (presence of the parking braking action). To the actuating lever 11 can be connected a return spring 12 which is suitable to elastically bias the actuating lever to the rest position. This return spring 12 acts between the actuating lever 11 and the main support body 6 or a device portion integral thereto, for example a counter-element 13 that is removably connected to the main support body 6.

The actuating means 8 comprise a driving shaft 14 which is suitable to rotate and/or to slide relative to the main support body 6 and a main plate 15 that is distinct from the driving shaft 14 and that is connected or can be connected thereto in a pivotably integral manner.

The driving shaft 14 is advantageously integrally rotatably connected with the actuating lever 11. In order to provide this rotatably integral connection with the actuating lever 11, the driving shaft 14 can comprise a connecting portion 51 having for example a knurled portion 52, which is suitable to provide a shape-coupling with a corresponding connecting seat 52' of the actuating lever 11, and a threaded portion 53, suitable for threaded connection for example with a nut 54 suitable to avoid relative sliding between the actuating lever 11 and the driving shaft 14.

In accordance with an embodiment, the main plate 15 comprises a co-operating side 55, which is advantageously provided with rolling seats 16 that are suitable to at least partially accommodate revolving bodies , preferably balls, 17 and cause the latter to roll therein, and a retaining side 56, opposite to the co-operation side 55 and preferably facing the thrust means 7.

According to an embodiment, the reaction element 9 comprises a reaction plate 18 facing the main plate 15. Advantageously, the reaction plate 18 comprises a co-operation surface 19, which comprises, in turn, rolling seats 20 that are suitable to at least partially accommodate the balls 17 and allow the latter to roll within the rolling seats 20. The balls 17 are thus interposed between the main plate 15 and the reaction plate 18 and are simultaneously accommodated within their respective rolling seats 16 and 20. With further advantage, the rolling seats 16 of the main plate 15 and the rolling seats 20 of the reaction plate 18 are shaped such that when the balls 17, interposed between the plates 15 and 18, simultaneously roll within these rolling seats 16 and 20, the main plate 15 and the reaction plate 18 are biased away from each other. This rolling movement is triggered by the rotation of the main plate 15, which is in turn operated by the actuating lever 11 by means of the driving shaft 14. Consequently, the driving shaft 14 - main plate 15 assembly is rotationally translated relative to the reaction element 9, which is connected to the main support body 6.

In accordance with an embodiment, the reaction plate 18 of the reaction element 9 forms means for the connection to a support device 21 that is suitable to support the thrust means 7. For example, the reaction plate 18 may form radially projecting portions 22 defining connecting seats 23 therebetween for connecting the reaction element 9 to the support device 21, for example with elastic legs 25 of a cage 24, that can be snap- connected to the reaction plate 18. Thereby, the cage 24 and the reaction element 9 result rotatably and translatably integrally connected with each other.

Advantageously, the cage 24 supports a thrust shaft 26 that is operatively connected to the main plate 15. This thrust shaft 26 is free to slide relative to the cage 24 and is preferably rotatably integral therewith. To the purpose, the cage 24 defines a shaft seat 27 having a contour substantially complementary with the contour of the thrust shaft 26, for example a contour provided with a plurality of lobes, which is suitable to provide a shape coupling between the thrust shaft 26 and the cage 24. Between the cage 24 and the thrust shaft 26 a counter-spring 28 can act, which is arranged such as to elastically bias the thrust shaft 26 to the main plate 15.

As may be understood by those skilled in the art, the rotational translation of the main plate 15, which has been triggered in the manner described above by the rotation of the actuating lever 11, results in a translation of the thrust shaft 26, which translates away from the reaction element 9, i.e. towards the disc space 4.

In order to reduce the frictional torques due to the relative rotations between the main plate 15 and the thrust shaft 26, anti-friction means may be arranged between the latter, for example a Teflon-coated fifth wheel 29.

In accordance with a possible embodiment, the thrust shaft 26 defines a threaded seat 30 suitable to accommodate a threaded pin 31. At the end of the threaded pin 31 facing the disc space 4, a thrust head 32 can be provided, preferably a truncated-cone shaped one, which is suitable to abut against a corresponding head seat 33 of a piston 34 that is free to slide within a piston seat 35 being defined by the main support body 6. The thrust head 32 is advantageously held pressed within the head seat 33 by a thrust spring 36 acting between the thrust head 32 and the piston. Due to this configuration, the translation of the thrust shaft 26 results in a translation of the piston 34, to which at least one of the above-mentioned pads is operatively connected, which is thereby biased against the brake disc accommodated within the disc space 4.

The threaded pin 31 has the advantageous function of recovering the clearance due to the pad wear, which are compensated by rotations thereof within the threaded seat 30 of the thrust shaft 26. Consequently, the thrust head 32 can rotate relative to the thrust spring 36 and piston 34.

According to a possible embodiment, in order to limit the frictional torques due to the relative rotations between the thrust spring 36 and the thrust head 32, anti-friction means are interposed between the latter, for example a plate 37 and/or a bearing 37'.

In order to reduce the overall dimensions of the parking device 2, the driving shaft advantageously comprises a hole 57 that is suitable to at least partially accommodate the threaded pin 31.

Advantageously, the piston 34 defines a cavity 38 therein. This cavity 38, besides at least partially accommodating the thrust means 7, is suitable to be filled with pressurized fluid, such that the piston 34 may be also hydraulically actuated, i.e. for the service braking, which can be actuated for example by pressing on the brake pedal.

Advantageously, the driving shaft 14 and/or the main plate 15 form sliding constraints 58 suitable to at least partially preventing relative sliding between the main plate 15 and the driving shaft 14 at least in a relative sliding direction T.

Due to the presence of the sliding constraints 58, the driving shaft 14 and the main plate 15 can be made as two distinct pieces, without additional components being required which are suitable to prevent them from relative sliding, such as axial bearings. Thereby, the overall dimensions of the parking device 2 can be reduced, as well as are the operations required for the assembly of the latter, which thus results to be simplified.

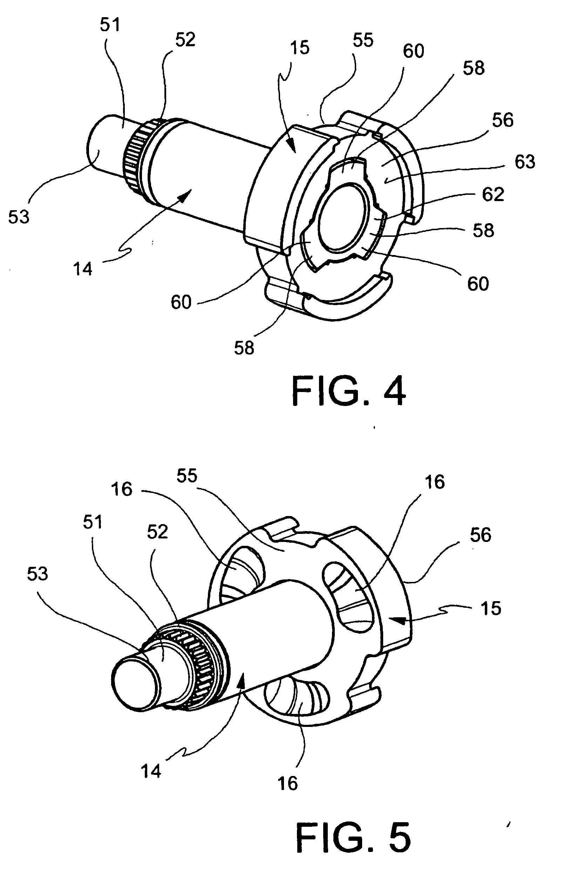

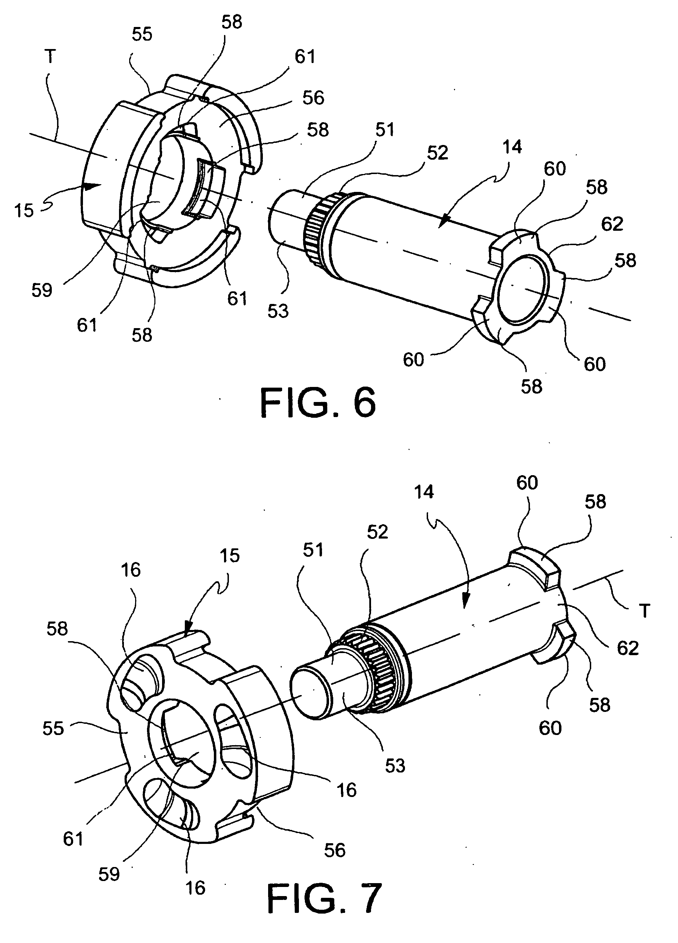

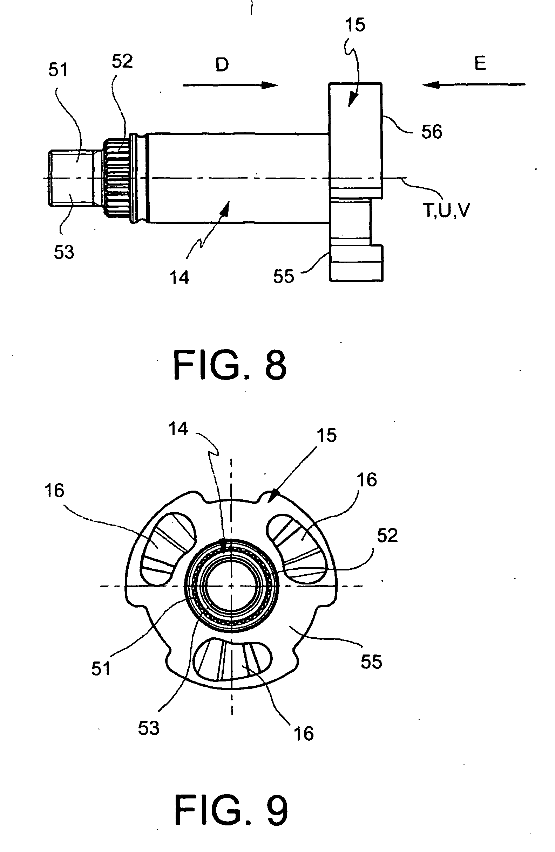

The sliding constraints 58 cause the main plate 15 and driving shaft to be at least partially translatably integral with each other. In order that a rotation of the driving shaft 14, for example triggered by the actuating lever 11, results in a rotation of the main plate 15, the latter and the driving shaft 14 are advantageously rotatably integrally connected to each other. Preferably, the connection between the main plate 15 and the driving shaft 14 is achieved by fitting the latter within a through opening 59 of the main plate which is suitable to at least partially accommodating the driving shaft (Fig. 4-11). In accordance with an embodiment, the driving shaft 14 is fitted within the through opening 59 with interference, such as to constrain the main plate 15 and driving shaft 14 relative to rotation and further to translation. Alternatively, or in addition to the interference connection, the rotatably integral connection between the main plate 15 and the driving shaft 14 can be achieved by means of geometrical coupling between the profile of the through opening 59 of the main plate 15 and the outer profile of the driving shaft 14 at the portion thereof which is fitted in this through opening 59. In accordance with a further embodiment, the connection of the driving shaft 14 and main plate 15 can be achieved by loosely fitting the driving shaft 14 within the through opening 59 of the main plate 15.

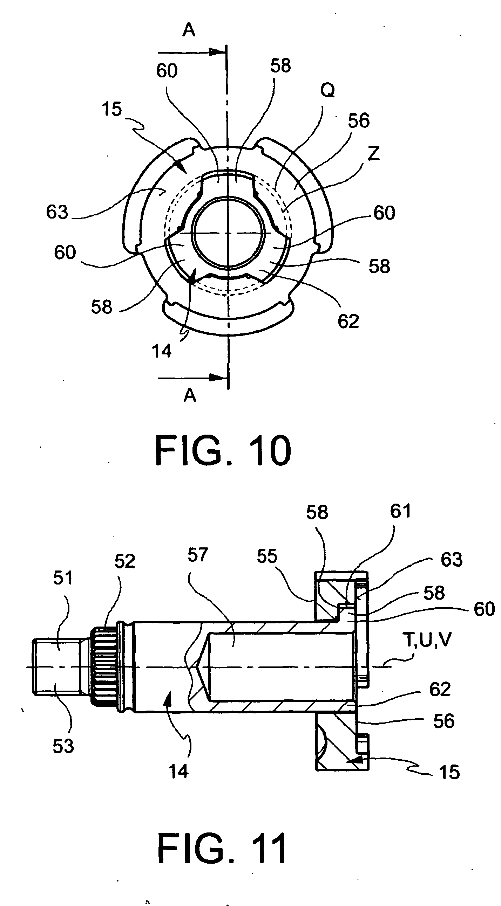

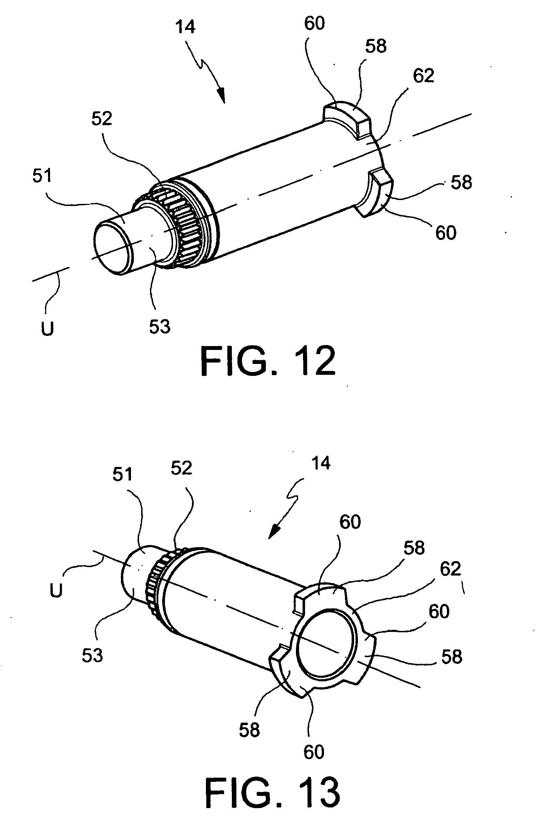

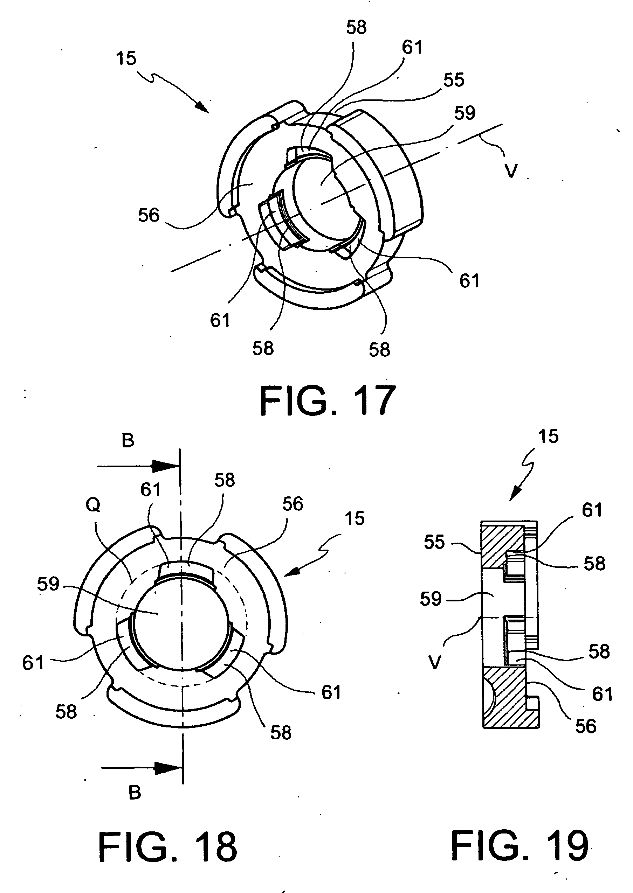

The driving shaft 14 and the main plate 15 preferably develop through axes U (Fig. 12-16) and V (Fig. 17-19), respectively. According to a possible embodiment, the driving shaft 14 and the main plate 15, in assembled conditions, are substantially co-axial with each other (i.e., in other words, their axes U and V are substantially coincident) and are shaped and connected to each other such that the relative sliding direction T, along which they would tend to slide relative to each other if no constraint were provided, coincides with their respective axes U and V (Fig. 11).

In accordance with an embodiment, the sliding constraints 58 are configured such as to avoid relative sliding between the main plate 15 and the driving shaft 14 along the relative sliding direction T according to only one sliding sense. Preferably, this one sliding sense coincides with the direction of the main plate 15 approaching the thrust means 7, particularly to the piston 34. Advantageously, the relative sliding between the main plate 15 and the driving shaft 14 in the sense opposite to those prevented by the sliding constraints 58, i.e., preferably, in the sense of the main plate 15 moving away from the thrust means 7, is prevented by the balls 17. These balls 7, in fact, by exerting a thrust on the main plate 15 in the direction of the axis V thereof opposite to the thrust exerted for example by the fifth wheel 29, not only tend to remove the plate from the driving shaft 14 while approaching the thrust means 7 (which movement is prevented by the sliding constraints 58), but they also have the advantageous function of counter-acting the movement of the plate relative to the driving shaft 14 away from these thrust means 7.

Advantageously, the sliding constraints 58 comprise one or more shoulders 60, and further advantageously, one or more shoulder seats 61, each of which is suitable to accommodate at least one, preferably only one, of these shoulders 60 such that the latter abut against them thereby constraining the relative sliding between the main plate 15 and the driving shaft 14 in the relative sliding direction T. Preferably, the shoulders 60 are associated with the driving shaft 14 and the shoulder seats 61 are associated with the main plate 15 (Fig. 4-11).

In accordance with an embodiment, the shoulders 60 are formed at a retaining end 62 of the driving shaft 14 which preferably faces the thrust means 7. Still more preferably, the shoulder seats 61 are formed on the retaining side 56 of the main plate 15 (this retaining side 56, as stated above, preferably faces the thrust means 7). Thereby, the shoulders 60 are capable of preventing the main plate 15 from sliding in the relative sliding direction T relative to the driving shaft 14 while approaching the thrust means 7.

Advantageously, the shoulders 60 radially project from the driving shaft 14, and preferably develop tangentially thereto. Further advantageously, the shoulder seats 61 are radially retracted portions of the through opening 59 of the main plate 15. Thereby, since the radially projecting shoulders 60 are fitted within the radially retracted shoulder seats 61, the overall dimensions of the driving shaft 14 - main plate 15 assembly in the assembly conditions can be reduced.

Further advantageously, the shoulders 60 and the shoulder seats 61, preferably having lower axial extensions (i.e. along the axes U and V, respectively) than the axial extension of the through opening 59 of the main plate 15, have axial extensions substantially equal to each other. Thereby, when the driving shaft 14 - main plate 15 assembly is assembled, the shoulders 60 that are fitted within the shoulder seats 61 and the main plate 15 define together, advantageously, a substantially planar surface 63 (to this purpose, see for example Fig. 4 and 11), which is suitable to co-operate for example with the fifth wheel 29.

Still more advantageously, the shoulders 60 and the shoulder seats 61 are shaped such as to provide a shape-coupling. Thereby, relative rotations are prevented between the main plate 15 and the driving shaft 14 about the respective axes U and V, which, as stated above, preferably coincide with the relative sliding axis T.

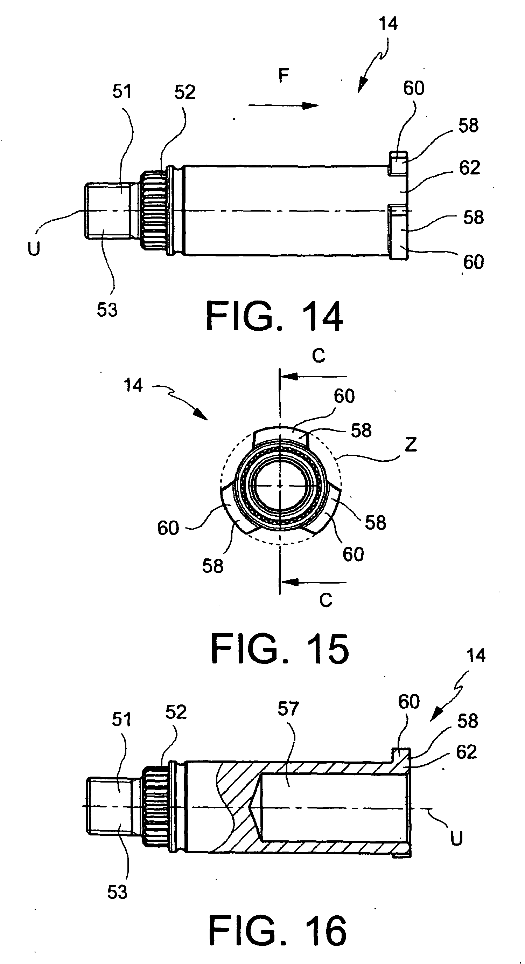

In accordance with an embodiment, the shoulders 60 are shaped such that their radially outer profiles define together a circumference Z of the shoulders (Fig. 15). According to a further embodiment, the shoulder seats 61 are shaped such that the profiles which radially define them (i.e. the radially outermost, i.e., in other words, the radially most retracted profiles of the shoulder seats) define a circumference Q of the shoulder seats (Fig. 18). Advantageously, these circumferences Q of the shoulder seats 61 and Z of the shoulders 60 are concentric relative to each other and, further advantageously, the circumference Q of the shoulder seats is radially outer of the circumference Z of the shoulders (Fig. 10). Thereby, between the shoulder seats 61 and the shoulders 60 accommodated therein a radial clearance is provided which facilitates the assembly of the main plate 15 to the driving shaft 14.

Advantageously, the shoulders 60 and the shoulder seats 61 are angularly respectively equally spaced and mutually corresponding, i.e. arranged at such angular distances that a shoulder seat 61 corresponds to each shoulder 60. Thereby, for the proper assembly of the main plate 15 and driving shaft 14, the latter can be caused to perform relative rotations until when each shoulder 60 is at an angular position corresponding to one of the shoulder seats 61. After the proper relative angular position has been reached between the driving shaft 14 and the main plate 15, the shoulders 60 can be fitted within the corresponding shoulder seats 61 in the relative sliding direction T. According to a possible embodiment, the shoulders 60 and shoulder seats 61 are a number of three.

The main plate 15 is preferably made of synthered steel.

The driving shaft 14 is preferably made of moulded steel.

From the description provided above, those skilled in the art may appreciate how the parking device according to the invention at least partially resolves the problems cited with reference to the prior art.

Particularly, those skilled in the art may appreciate how, due to the presence of the sliding constraints associated with the driving shaft and/or plate, the constructive solution may be adopted according to which the driving shaft and the main plate are distinct from each other, without encountering excessive problems of dimensions and assembly of the device. In fact, the provision of the sliding constraints associated with the driving shaft and/or plate allows eliminating additional components, such as for example axial bearings to hold the main plate in position. As additional components are eliminated, the overall dimensions are consequently reduced. Furthermore, the mutual coupling of the shoulders and shoulder seats results to be easy, and therefore the assembly of the parking device results to be less difficult as compared with the case in which these additional components should be assembled.

It is understood that variations and/or additions to what has been described above can be provided.

For example, the shoulders may be associated with the main plate and the shoulder seats to the driving shaft.

According to another variant embodiment, the shaft shoulders may abut against any surface of the main plate rather than in suitable shoulder seats.

According to another variation, the main plate side facing the thrust means may be the co-operation side, which is provided with the rolling seats for the balls, rather than the retaining one, which is provided with the shoulder seats for the shoulders. In this case, the main plate may act on a reaction portion of the device which is operatively connected to the thrust means rather than being connected to the main support body.

To the above-described embodiments of the parking device, brake caliper and disc brake according to the invention, those skilled in the art, aiming at meeting specific contingent requirements, may carry out a number of variations, modifications, or replacements of elements with functionally equivalent ones, without however departing from the scope of the following claims.

## Claims

1. Parking device (2) of a brake caliper (1) for a disc brake of a vehicle, comprising:
- a main support body (6);
- thrust means (7) which are suitable to exert a thrust action on at least one pad such that the latter engages a brake disc of the disc brake associated with a wheel of said vehicle, thereby tightening the latter;
- actuating means (8) suitable to actuate said thrust means (7) such that these exert said thrust action on the pad, said actuating means (8) comprising a driving shaft. (14) that is capable of rotating and/or sliding relative to said main support body (6) and a main plate (15) distinct from said driving shaft (14) and being connected or connectable thereto in a pivotally integral manner, wherein said driving shaft (14) and/or said main plate (15) form sliding constraints (58) that are suitable to at least partially prevent relative sliding between the main plate (15) and the driving shaft (14) in at least one relative sliding direction (T),
**characterized in that**
said main plate (15) defines a through opening (59) that is suitable to at least partially accommodate said driving shaft (14),
said sliding constraints (58) comprise one or more shoulders (60), said sliding constraints (58) comprise one or more shoulder seats (61) which are suitable to accommodate at least one of said shoulders (60) such that said shoulders (60) abut against said shoulder seats (61),
said shoulders (60) and said shoulder seats (61) are shaped such as to provide a shape coupling suitable to prevent relative rotations between said main plate (15) and said driving shaft (14) about said relative sliding direction (T),
and said shoulder seats (61) are in a radially retracted portions of said through opening (59) of the main plate (15).

2. The device (2) according to the preceding claim, wherein said main plate (15) defines a through opening (59) that is suitable to at least partially accommodate said driving shaft (14) and/or said driving shaft (14) is interference fitted within said through opening (59) of said main plate (15).

3. The device (2) according to claim 2, wherein said driving shaft (14) is loosely fitted within said through opening (59) of the main plate (15).

4. The device (2) according to any preceding claim, wherein said parking shaft (14) and said main plate (15) are substantially co-axial with each other, and/or the axes (U,V) of said driving shaft (14) and said main plate (15) substantially coinciding with said at least one relative sliding direction (T), and/or wherein said sliding constraints (58) are configured such as to avoid relative sliding of said main plate (15) and said driving shaft (14) in said relative sliding direction (T) according to an individual sliding sense.

5. The device (2) according to the preceding claim, wherein said sliding constraints (58) are configured such that said one prevented sliding sense/way coincides with the sense/way in which the main plate (15) approaches the thrust means (7).

6. The device (2) according to claim 5, wherein said shoulders (60) are associated with said driving shaft (14) and/or said shoulder seats (61) are associated with said main plate (15) and/or wherein each of said shoulder seats (61) is suitable to accommodate only one of said shoulders (60).

7. The device (2) according to any claim 5 to 6, wherein said shoulders (60) are formed at a retaining end (62) of said driving shaft (14) and/or wherein said retaining end (62) faces said thrust means (7) and/or wherein said shoulders (60) radially project from said driving shaft (14).

8. The device (2) according to any claim 5 to 7, wherein said shoulders (60) develop tangentially to said driving shaft (14).

9. The device (2) according to any claim 1 to 8, wherein said shoulders (60) can be fitted within said shoulder seats (61) in said relative sliding direction (T) and/or said shoulder seats (61) have a lower axial extension than the axial extension of said through opening (59) of the main plate (15).

10. The device (2) according to any claim 1 to 9, wherein said shoulder seats (61) have an axial extension that is substantially equal to the axial extension of said shoulders (60) and/or wherein, in conditions of driving shaft (14) and main plate (15) assembled, the shoulders (60) fitted within the shoulder seats (61) and main plate (15) define together a substantially planar surface (63).

11. The device (2) according to any claim 1 to 10, wherein said shoulders (60) are shaped such that their radially outer profiles define together a circumference of the shoulders (Z) and/or wherein said shoulder seats (61) are shaped such that their radially most retracted profiles define together a circumference of the shoulder seats (Q) and/or wherein said circumferences of the shoulders (Z) and shoulder seats (Q) are substantially concentric and/or wherein said circumference of the shoulder seats (Q) is radially outer of said circumference of the shoulders (Z), such as to leave a radial clearance between the shoulders (60) and the shoulder seats (61) and/or wherein said shoulders (60) and said shoulder seats (61) are respectively equally spaced relative to each other and mutually corresponding.

12. The device (2) according to any claim 1 to 11, wherein said shoulders (60) and said shoulder seats (61) are a number of three.

13. The device (2) according to any claim 15 to 12, wherein said main plate (15) comprises a retaining side (56), comprising said shoulder seats (61), and a co-operation side (55) opposite the retaining side (56), said co-operation side (55) being suitable to co-operate by means of revolving bodies (17) with a reaction portion (9) of said parking device (2) and/or wherein said co-operation side (55) of the main plate (15) comprises one or more rolling seats (16) which are suitable to at least partially accommodate said revolving bodies (17), such that the latter can roll within said rolling seats (16), thereby providing said co-operation with said reaction portion (9).

14. The device (2) according to the preceding claim, wherein said revolving bodies (17) are further at least partially accommodated and suitable to roll within rolling seats (20) of said reaction portion (9) corresponding to said rolling seats (16) of the main plate (15), such as to provide said co-operation between the main plate (15) and the reaction portion (9) and/or wherein said rolling seats (16,20) of the main plate (15) and reaction portion (9) are shaped such that, due to said revolving bodies (17) rolling therein, said main plate (15) and said reaction portion (9) move away from each other.

15. The device (2) according to any claim 13 to 14, wherein said rolling of the revolving bodies (17) can be triggered by means of a rotation of said main plate (15) relative to said main support body (6) and/or wherein said revolving bodies (17) prevent relative sliding of the main plate (15) and driving shaft (14) along said relative sliding direction (T) according to a sense opposite the sense inhibited by said sliding constraints (58) and/or wherein said retaining side (56) of the main plate (15) faces said thrust means (7).

16. The device (2) according to any preceding claim, wherein said main plate (15) is made of synthered steel and/or wherein said driving shaft (14) is made of moulded steel.

17. A brake caliper (1) comprising a parking device (2) according to any preceding claim.

18. The brake caliper (1) according to the preceding claim, of the floating type.

19. A disc brake comprising a brake caliper (1) according to claim 17 or 18.

## Patentansprüche

1. Parkgerät (2) von einem Bremssattel (1) für eine Scheibenbremse von einem Fahrzeug, aufweisend:
- einen Hauptträgerkörper (6);
- Vorschubmittel (7), die geeignet sind eine Vorschubbewegung auf zumindest einen Belag auszuüben, so dass der Letztere eine Bremsscheibe von der Scheibenbremse betätigt, zugeordnet zu einem Rad von dem Fahrzeug, dabei wird das Letztere angezogen;
- Betätigungsmittel (8) geeignet um die Vorschubmittel (7) zu betätigen, so dass diese die Vorschubbewegung auf den Belag ausüben, diese Betätigungsmittel (8) weisen eine Antriebswelle (14) auf, die in der Lage ist zu rotieren und/oder gleiten relativ zu dem Hauptträgerkörper (6) und einer Hauptplatte (15), verschieden von der Antriebswelle (14) und ist hiermit verbunden oder verbindbar in einer zentralen, ganzheitlich schwenkbaren Weise,
wobei die Antriebswelle (14) und/oder die Hauptplatte (15) Gleitbeschränkungen (58) bilden, welche geeignet sind um zumindest teilweise relatives Gleiten zu verhindern zwischen der Hauptplatte (15) und der Antriebswelle (14) in zumindest einer relativen Gleitrichtung (T),
**dadurch gekennzeichnet, dass**
die Hauptplatte (15) eine Durchgangsöffnung (59) definiert, welche geeignet ist zumindest teilweise die Antriebswelle (14) aufzunehmen, die Gleitbeschränkungen (58) weisen auf eine oder mehrere Schultern (60), die Gleitbeschränkungen (58) weisen auf einen oder mehrere Schultersitze (61), die geeignet sind zumindest eine von den Schultern (60) aufzunehmen, so dass diese Schultern gegen die Schultersitze (61) stoßen,
die Schultern (60) und die Schultersitze (61) sind geformt um eine Formkoppelung zu bieten, geeignet um relative Rotation zwischen der Hauptplatte (15) und der Antriebswelle (14) um die relative Gleitrichtung (T) zu verhindern,
und die Schultersitze (61) sind in einem radial eingefahrenen Abschnitt von der Durchgangsöffnung (59) von der Hauptplatte (15).

2. Das Gerät (2) nach dem vorstehenden Anspruch, wobei die Hauptplatte (15) eine Durchgangsöffnung (59) definiert, die geeignet ist um zumindest teilweise die Antriebswelle (14) aufzunehmen und/oder die Antriebswelle (14) ist press-gepasst innerhalb der Durchgangsöffnung (59) von der Hauptplatte (15).

3. Das Gerät (2) nach Anspruch 2, wobei die Antriebswelle (14) lose befestigt ist innerhalb der Durchgangsöffnung (59) von der Hauptplatte (15).

4. Das Gerät (2) nach einem der vorstehenden Ansprüche, wobei die Antriebswelle (14) und die Hauptplatte (15) im Wesentlichen co-axial miteinander sind, und/oder die Achsen (U,V) von der Antriebswelle (14) und der Hauptplatte (15) decken sich im Wesentlichen mit der zumindest einen relativen Gleitrichtung (T), und/oder wobei die GleitBeschränkungen (58) konfiguriert sind, so dass relatives Gleiten verhindert werden kann von der Hauptplatte (15) und der Antriebswelle (14) in die relative Gleitrichtung (T), nach einem individuellen Gleitsinn.

5. Das Gerät (2) nach dem vorstehenden Anspruch, wobei die GleitBeschränkungen (58) konfiguriert sind, so dass dieser eine verhinderte Gleit -Sinn/Weg übereinstimmt mit dem Sinn/Weg mit welchem sich die Hauptplatte (15) dem Schubmittel (7) annähert.

6. Das Gerät (2) nach Anspruch 5, wobei die Schultern (60) in Verbindung mit der Antriebswelle (14) sind und/oder die Schultersitze (61) mit der Hauptplatte (15) in Verbindung sind und/oder wobei jeder von den Schultersitzen (61) geeignet ist nur eine von den Schultern (60) aufzunehmen.

7. Das Gerät (2) nach einem der Ansprüche 5 bis 6, wobei die Schultern (60) an einem Halte-Ende (62) der Antriebswelle (14) gebildet sind und/oder wobei das Halte-Ende (62) dem Schubmittel (7) zugewandt ist und/oder wobei die Schultern (60) radial von der Antriebswelle (14) abstehen.

8. Das Gerät (2) nach einem der Ansprüche 5 bis 7, wobei die Schultern (60) sich tangential zu der Antriebswelle (14) erstreckt.

9. Das Gerät (2) nach einem der Ansprüche 1 bis 8, wobei die Schultern (60) eingepasst werden können innerhalb der Schultersitze (61) in der relativen Gleitrichtung (T) und/oder die Schultersitze (61) eine geringere Axial-Verlängerung haben als die Axial-Verlängerung von der Durchgangsöffnung (59) von der Hauptplatte (15).

10. Das Gerät (2) nach einem der Ansprüche 1 bis 9, wobei die Schultersitze (61) eine Axial-Verlängerung haben, die im Wesentlichen gleich der Axial-Verlängerung von den Schultern (60) ist und/oder wobei, in Zuständen in denen Antriebswelle (14) und Hauptplatte (15) zusammengefügt sind, die Schultern (60), eingepasst in die Schultersitze (61) und Hauptplatte (15), definieren zusammen eine im Wesentlichen flache Oberfläche (63).

11. Das Gerät (2) nach einem der Ansprüche 1 bis 10, wobei die Schultern (60) geformt sind, so dass ihre radiale äußeren Profile zusammen einen Umfang von den Schultern (Z) definieren und/oder wobei die Schultersitze (61) so geformt sind, dass ihre radial am meisten eingezogenen Profile zusammen einen Umfang von den Schultersitzen (Q) definieren und/oder wobei die Umfänge von den Schultern (Z) und Schultersitze (Q) im Wesentlichen konzentrisch sind und/oder wobei der Umfang von den Schultersitzen (Q) radial außen ist von dem Umfang von den Schultern (Z), so dass ein radialer Freiraum zwischen den Schultern (60) und den Schultersitzen (61) gelassen wird und/oder wobei die Schultern (60) und die Schultersitze (61) jeweils im gleichen Abstand zueinander angeordnet und miteinander korrespondierend sind.

12. Das Gerät (2) nach einem der Ansprüche 1 bis 11, wobei die Schultern (60) und die Schultersitze (61) eine Anzahl von drei sind.

13. Das Gerät (2) nach einem der Ansprüche 1 bis 12, wobei die Hauptplatte (15) eine Halteseite (56) aufweist, aufweisend die Schultersitze (61), und eine Kooperationsseite (55), gegenüberliegend der Halteseite (56), die Kooperationsseite (55) ist geeignet zu kooperieren mittels drehender Körper (17) mit einem Reaktionsabschnitt (9) von dem Parkgerät (2) und/oder wobei die Kooperationsseite (55) von der Hauptplatte (15) einen oder mehrere Rollsitze (16) aufweist, die geeignet sind um zumindest teilweise die drehenden Körper (17) aufzunehmen, so dass die Letzteren rollen können, innerhalb der Rollsitze (16), dabei stellen sie die Kooperation mit dem Reaktionsabschnitt (9) her.

14. Das Gerät (2) nach dem vorstehenden Anspruch, wobei die drehenden Körper (17) weiterhin zumindest teilweise aufgenommen sind und geeignet sind innerhalb von Rollsitzen (20) zu rollen von dem Reaktionsabschnitt (9), korrespondierend zu den Rollsitzen (16) von der Hauptplatte (15), so dass die Kooperation zwischen der Hauptplatte (15) und des Reaktionsabschnittes (9) hergestellt wird und/oder wobei die Rollsitze (16, 20) von der Hauptplatte (15) und Reaktionsabschnitt (9) so geformt sind, dass wegen dem Rollen der drehenden Körper (17) darin, die Hauptplatte (15) und der Reaktionsabschnitt (9) sich voneinander weg bewegen.

15. Das Gerät (2) nach einem der Ansprüche 13 bis 14, wobei das Rollen von den drehenden Körpern (17) ausgelöst werden kann mittels einer Rotation von der Hauptplatte (15), relativ zu dem Hauptträgerkörper (6) und/oder wobei die drehenden Körper (17) relatives gleiten verhindern von der Hauptplatte (15) und Antriebswelle (14) entlang der relativen Gleitrichtung (T), nach einem Sinn gegenüberliegend dem Sinn, der von den Gleitbeschränkungen (58) verhindert wird und/oder wobei die Halteseite (56) von der Hauptplatte (15) den Schubmitteln (7) zugewandt ist.

16. Das Gerät (2) nach einem der vorstehenden Ansprüche, wobei die Hauptplatte (15) aus gesintertem Stahl hergestellt ist und/oder wobei die Antriebswelle (14) aus gegossenem Stahl hergestellt ist.

17. Ein Bremszylinder (1) aufweisend ein Parkgerät (2) nach einem vorstehenden Anspruch.

18. Ein Bremszylinder (1) nach dem vorstehenden Anspruch, schwimmend gelagert.

19. Eine Scheibenbremse aufweisend einen Bremszylinder (1) nach Anspruch 17 oder 18.

## Revendications

1. Dispositif de stationnement (2) d'un étrier de frein (1) pour frein à disque d'un véhicule, comprenant :
- un corps de support principal (6) ;
- des moyens de poussée (7) qui sont appropriés pour exercer une action de poussée sur au moins une plaquette de sorte que cette dernière s'engage sur un disque du frein à disque associé à une roue dudit véhicule, serrant ainsi celle-ci ;
- des moyens d'actionnement (8) appropriés pour actionner lesdits moyens de poussée (7) de sorte que ceux-ci exercent ladite action de poussée sur la plaquette, lesdits moyens d'actionnement (8) comprenant un arbre d'entraînement (14) qui est capable de tourner et/ou de coulisser par rapport audit corps de support principal (6) et une plaque principale (15) distincte dudit arbre d'entraînement (14) et raccordée ou susceptible d'être raccordée à celui-ci d'un seul tenant à pivotement, dans lequel ledit arbre d'entraînement (14) et/ou ladite plaque principale (15) forment des contraintes de coulissement (58) qui conviennent pour au moins en partie empêcher un coulissement relatif entre la plaque principale (15) et l'arbre d'entraînement (14) dans au moins une direction de coulissement relatif (T),
**caractérisé en ce que**
ladite plaque principale (15) définit une ouverture traversante (59) qui est appropriée pour au moins en partie recevoir ledit arbre d'entraînement (14),
lesdites contraintes de coulissement (58) comprennent un ou plusieurs épaulements (60), lesdites contraintes de coulissement (58) comprennent un ou plusieurs sièges d'épaulements (61) qui sont appropriés pour recevoir au moins l'un desdits épaulements (60) de sorte que lesdits épaulements (60) viennent en butée contre lesdits sièges d'épaulements (61),
lesdits épaulements (60) et lesdits sièges d'épaulements (61) sont façonnés de manière à assurer un couplage de forme approprié pour empêcher des rotations relatives entre ladite plaque principale (15) et ledit arbre d'entraînement (14) autour de ladite direction de coulissement relatif (T),
et lesdits sièges d'épaulements (61) se trouvent dans des portions radialement rétractées de ladite ouverture traversante (59) de la plaque principale (15).

2. Dispositif (2) selon la revendication précédente, dans lequel ladite plaque principale (15) définit une ouverture traversante (59) qui convient pour au moins en partie recevoir ledit arbre d'entraînement (14) et/ou ledit arbre d'entraînement (14) est ajusté par interférence à l'intérieur de ladite ouverture traversante (59) de ladite plaque principale (15).

3. Dispositif (2) selon la revendication 2, dans lequel ledit arbre d'entraînement (14) est ajusté de manière lâche à l'intérieur de ladite ouverture traversante (59) de la plaque principale (15).

4. Dispositif (2) selon l'une quelconque des revendications précédentes, dans lequel ledit arbre de stationnement (14) et ladite plaque principale (15) sont sensiblement coaxiaux l'un par rapport à l'autre, et/ou les axes (U, V) dudit arbre d'entraînement (14) et de ladite plaque principale (15) coïncidant sensiblement avec ladite au moins une direction de coulissement relatif (T), et/ou dans lequel lesdites contraintes de coulissement (58) sont configurées de manière à éviter un coulissement relatif de ladite plaque principale (15) et dudit arbre d'entraînement (14) dans ladite direction de coulissement relatif (T) selon un sens de coulissement individuel.

5. Dispositif (2) selon la revendication précédente, dans lequel lesdites contraintes de coulissement (58) sont configurées de sorte que ledit sens ou ladite voie de coulissement empêché(e) coïncide avec le sens ou la voie dans lequel ou laquelle la plaque principale (15) approche des moyens de poussée (7).

6. Dispositif (2) selon la revendication 5, dans lequel lesdits épaulements (60) sont associés audit arbre d'entraînement (14) et/ou lesdits sièges d'épaulements (61) sont associés à ladite plaque principale (15) et/ou dans lequel chacun desdits sièges d'épaulements (61) est approprié pour ne recevoir qu'un desdits épaulements (60).

7. Dispositif (2) selon l'une quelconque des revendications 5 à 6, dans lequel lesdits épaulements (60) sont formés à une extrémité de retenue (62) dudit arbre d'entraînement (14) et/ou dans lequel ladite extrémité de retenue (62) est tournée vers lesdits moyens de poussée (7) et/ou dans lequel lesdits épaulements (60) font radialement saillie dudit arbre d'entraînement (14).

8. Dispositif (2) selon l'une quelconque des revendications 5 à 7, dans lequel lesdits épaulements (60) se développent tangentiellement audit arbre d'entraînement (14).

9. Dispositif (2) selon l'une quelconque des revendications 1 à 8, dans lequel lesdits épaulements (60) peuvent être ajustés à l'intérieur desdits sièges d'épaulements (61) dans ladite direction de coulissement relatif (T) et/ou lesdits sièges d'épaulements (61) ont une extension axiale inférieure à l'extension axiale de ladite ouverture traversante (59) de la plaque principale (15).

10. Dispositif (2) selon l'une quelconque des revendications 1 à 9, dans lequel lesdits sièges d'épaulements (61) ont une extension axiale qui est sensiblement égale à l'extension axiale desdits épaulements (60) et/ou dans lequel, dans des conditions d'assemblage de l'arbre d'entraînement (14) et de la plaque principale (15), les épaulements (60) ajustés à l'intérieur des sièges d'épaulements (61) et la plaque principale (15) définissent ensemble une surface sensiblement plane (63).

11. Dispositif (2) selon l'une quelconque des revendications 1 à 10, dans lequel lesdits épaulements (60) sont façonnés de sorte que leurs profils radialement externes définissent ensemble une circonférence des épaulements (Z) et/ou dans lequel lesdits sièges d'épaulements (61) sont façonnés de sorte que leurs profils radialement les plus rétractés définissent ensemble une circonférence des sièges d'épaulements (Q) et/ou dans lequel lesdites circonférences des épaulements (Z) et des sièges d'épaulements (Q) sont sensiblement concentriques et/ou dans lequel ladite circonférence des sièges d'épaulements (Q) est radialement extérieure à ladite circonférence des épaulements (Z), de manière à laisser un jeu radial entre les épaulements (60) et les sièges d'épaulements (61) et/ou dans lequel lesdits épaulements (60) et lesdits sièges d'épaulements (61) sont respectivement espacés de manière égale l'un par rapport à l'autre et en correspondance mutuelle.

12. Dispositif (2) selon l'une quelconque des revendications 1 à 11, dans lequel lesdits épaulements (60) et lesdits sièges d'épaulements (61) sont au nombre de trois.

13. Dispositif (2) selon l'une quelconque des revendications 1 à 12, dans lequel ladite plaque principale (15) comprend un côté de retenue (56), comprenant lesdits sièges d'épaulements (61), et un côté de coopération (55) opposé au côté de retenue (56), ledit côté de coopération (55) étant approprié pour coopérer à l'aide de corps rotatifs (17) avec une portion de réaction (9) dudit dispositif de stationnement (2) et/ou dans lequel ledit côté de coopération (55) de la plaque principale (15) comprend un ou plusieurs sièges de roulement (16) qui sont appropriés pour recevoir au moins en partie lesdits corps rotatifs (17), de sorte que ces derniers puissent rouler à l'intérieur desdits sièges de roulement (16), assurant ainsi ladite coopération avec ladite portion de réaction (9).

14. Dispositif (2) selon la revendication précédente, dans lequel lesdits corps rotatifs (17) sont en outre au moins en partie reçus et appropriés pour rouler à l'intérieur de sièges de roulement (20) de ladite portion de réaction (9) correspondant auxdits sièges de roulement (16) de la plaque principale (15), de manière à assurer ladite coopération entre la plaque principale (15) et la portion de réaction (9) et/ou dans lequel lesdits sièges de roulement (16, 20) de la plaque principale (15) et de la portion de réaction (9) sont façonnés de sorte que, en raison de la rotation desdits corps rotatifs (17) à l'intérieur, ladite plaque principale (15) et ladite portion de réaction (9) s'écartent l'une de l'autre.

15. Dispositif (2) selon l'une quelconque des revendications 13 à 14, dans lequel ledit roulement des corps rotatifs (17) peut être déclenché par une rotation de ladite plaque principale (15) par rapport audit corps de support principal (6) et/ou dans lequel lesdits corps rotatifs (17) empêchent un coulissement relatif de la plaque principale (15) et de l'arbre d'entraînement (14) le long de ladite direction de coulissement relatif (T) selon un sens opposé au sens empêché par lesdites contraintes de coulissement (5 8) et/ou dans lequel ledit côté de retenue (56) de la plaque principale (15) est tournée vers lesdits moyens de poussée (7).

16. Dispositif (2) selon l'une quelconque des revendications précédentes, dans lequel ladite plaque principale (15) est fabriquée en acier fritté et/ou dans lequel ledit arbre d'entraînement (14) est fabriqué en acier moulé.

17. Etrier de frein (1) comprenant un dispositif de stationnement (2) selon une quelconque des revendications précédentes.

18. Etrier de frein (1) selon la revendication précédente du type flottant.

19. Frein à disque comprenant un étrier de frein (1) selon la revendication 17 ou 18.
